# EUROPEAN PATENT APPLICATION

(11) **EP 0 816 952 A2**
(43) Date of publication of application: **07.01.1998**
(21) Application number: 97401487.0
(22) Date of filing: 26.06.1997
(51) Int. Cl.: G03H 1/26

(54) **Method and apparatus for creating a holographic stereogram**

(30) Priority: 02.07.1996 JP 172381/96
(71) Applicant: SONY CORPORATION, Tokyo (JP)
(72) Inventor: Kihara, Nobuhiro, Shinagawa-ku, Tokyo (JP); Shirakura, Akira, Shinagawa-ku, Tokyo (JP); Baba, Shigeyuki, Shinagawa-ku, Tokyo (JP)
(74) Representative: Thévenet, Jean-Bruno

(57) **Abstract**

A method and an apparatus for creating a holographic stereogram are provided for offering an optically equivalent effect to that obtained by locating a mask on a hologram recording medium, without having to locate the mask on the hologram recording medium, and thereby realizing a high-quality hologram without having to complicate the area around the hologram recording medium. The creating method is executed to display an image at a co-ordinate location of the hologram recording medium (30) on a display unit (41), condense a laser beam transmitted through the display unit on the co-ordinate location of the hologram recording medium as an object beam and apply part of the laser beam before transmission through the display means onto the hologram recording medium as a reference beam, and sequentially form the stripped or dotted holographic elements on the hologram recording medium. In this method, a diffuser panel (42) is located close to the display unit for diffusing the beam. A mask (43) having an opening (43a) is located downstream of the display unit and the diffuser panel. The opening corresponds to each holographic element. The object beam is condensed and then is transmitted through the mask (43). Then, the transmitted beam is re-condensed through an optical system (45, 46) and is applied onto the hologram recording medium.

## Description

### BACKGROUND OF THE INVENTION

### 1. Field of the Invention

The present invention relates to a method and an apparatus for creating a holographic stereogram for three-dimensionally recognising a real image or a computer-created image.

### 2. Description of Prior Art

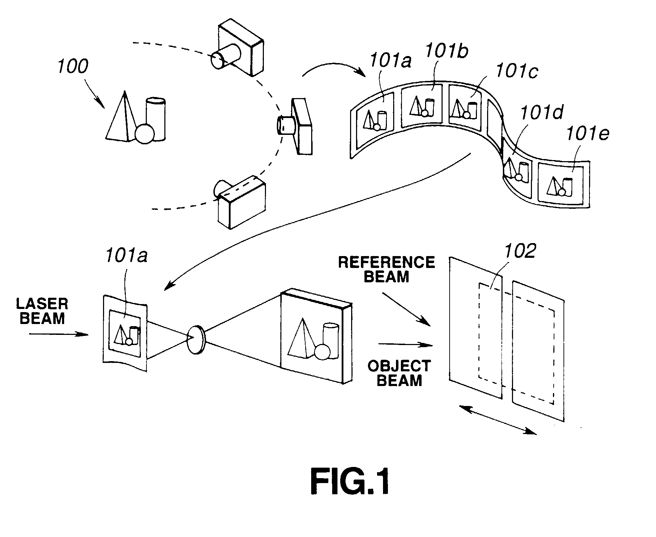

In general, for creating holographic stereograms, lots of original images obtained by sequentially imaging an object from different points of observation are recorded on one hologram recording medium as stripped or dotted holographic elements. For example, as shown in Fig. 1, the holographic stereogram having only horizontal parallax information includes a plurality of original images 101a to 101e obtained by sequentially imaging an object 100 from different points of observation in the horizontal direction on a hologram recording medium 102 as stripped holographic elements.

When a person watches this holographic stereogram at a certain location with his or her one eye, he or she can watch a two-dimensional image that is a set of image information of one portion of each holographic element. When the person moves his or her eye location in the horizontal direction, he or she can watch another two-dimensional image that is a set of image information of another portion of each holographic element. Hence, when the person watches this holographic stereogram with his or her eyes, since the locations of his or her right and left eyes are slightly different from each other, the two-dimensional image appearing on the right eye is slightly different from the two-dimensional image appearing on the left eye. This slight difference offers the person a parallax effect, so that the person can recognise the holographic stereogram as a three-dimensional image.

In creating the holographic stereogram, a laser beam with excellent interference is divided into two parts, one of which is a projected image (object beam) two-dimensionally modulated by an image display unit (for example, a LCD panel) and the other one of which is a reference beam. Both of the beams are condensed on each holographic element, that is a portion of a hologram recording medium composed of a photosensitive material. Then, an interference pattern is recorded as change of a refractive index of the photosensitive material at a holographic element. Each of the holographic elements is formed by the above-mentioned process.

In order to obtain a high-quality hologram, it is effective to locate a diffuser panel close to the image display unit.

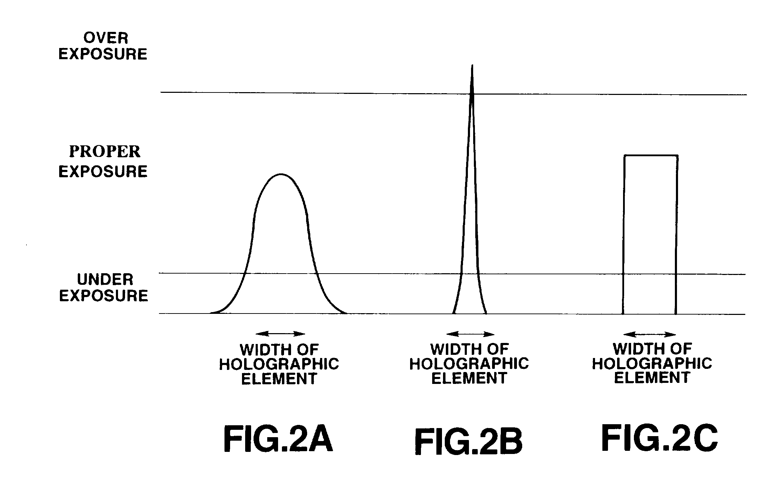

When the diffuser panel is located close to the image display unit, the strong diffuser panel disadvantageously makes the exposing range too wide so that a portion other than the necessary holographic element is exposed, as shown in Fig.2A. The wider exposure may do damage to the image quality.

To overcome this disadvantage, a pseudo-diffuser panel may be used for bringing about such weak diffusion as keeping the exposure inside of the holographic element width, as shown in Fig.2B, for the purpose of preventing leakage of light.

The use of this method, however, makes it possible to expose only part of the necessary holographic element width, thereby degrading the image quality as well.

To obtain the high-quality hologram, it is necessary to uniformly apply proper exposure to the inside of the necessary holographic element width, as shown in Fig.2C. Hence, a mask having an aperture or slit corresponding to each holographic element is located on the hologram recording medium closely, so that the unnecessary object beam is screened. This makes it possible to positively expose the inside of the necessary holographic element width.

However, since various components (such as a mechanism for feeding the hologram recording medium at each holographic element unit) are collectively located around the hologram recording medium, a complicated design is required for locating the mask on the hologram recording medium.

### SUMMARY OF THE INVENTION

The present invention is proposed in consideration of the foregoing conventional conditions, and it is an object of the present invention to provide a method and an apparatus for creating a holographic stereogram which method and apparatus enable to offer an optically equivalent effect to the construction of locating a mask, without having to locate the mask on a hologram recording medium, and offer a high-quality hologram without having to complicate the area around the hologram recording medium.

In carrying out the object, according to an aspect of the present invention, a method for creating a holographic stereogram includes the steps of displaying an image corresponding to a co-ordinate location of the hologram recording medium on a display unit, condensing a laser beam transmitted through the display unit as an object beam on the co-ordinate location of the hologram recording medium and applying part of the laser beam before transmission through the display unit as a reference beam onto the hologram recording medium, and sequentially forming stripped or dotted holographic elements on the hologram recording medium, wherein a mask having an aperture or slit corresponding to each holographic element is disposed between the display unit and the hologram recording medium and the object beam is condensed through the mask and then is re-condensed through the effect of an optical system, and the condensed light is applied onto the hologram recording medium.

According to another aspect of the invention, an apparatus for creating a holographic stereogram includes a display unit for displaying an image at the corresponding co-ordinate locations of the hologram recording medium, a laser beam source for applying a laser beam transmitted through the display unit as an object beam onto a hologram recording medium and part of the laser beam before transmission through the display unit as a reference beam onto the hologram recording medium, a diffuser panel for diffusing a beam and located close to the display unit, a mask located in the downstream of the light beam of the display unit and the diffuser panel and having a corresponding aperture or slit to each holographic element, a first optical system located between the display unit and the mask and for condensing the object beam transmitted through the display unit onto the opening of the mask, and a second optical system located between the mask and the hologram recording medium for re-condensing the object beam transmitted through the aperture of the mask onto the co-ordinate location of the hologram recording medium.

According to another aspect of the invention, the diffuser panel serves to properly diffuse the object beam and the mask serves to screen the unnecessary object beam.

The object beam restricted by this mask is condensed to the necessary holographic element width through the effect of the optical system located between the mask and the hologram recording medium and then is applied to the hologram recording medium.

The foregoing arrangement makes it possible to offer the same optical effect as is achieved by locating a mask on the hologram recording medium, without having to actually locate the mask on the hologram recording medium and unnecessarily to complicate the area around the hologram recording medium.

As mentioned above, the method and the apparatus according to the invention for creating a holographic stereogram make it possible to offer an optically equivalent effect to the method and the apparatus having a mask located on the hologram recording medium, without having to locate the mask thereon, and offer a high-quality hologram without having to complicate the area around the hologram recording medium.

Further objects and advantages of the present invention will be apparent from the following description of the preferred embodiments of the invention as illustrated in the accompanying drawings.

### BRIEF DESCRIPTION OF THE DRAWINGS

In order that the invention may be readily carried into effect, it will now be described with reference to the accompanying drawings, wherein:
Fig.1 is a diagrammatic view showing a method for creating a holographic stereogram;
Figs.2A, 2B and 2C are characteristic graphs showing a difference of a shape of an object beam on a hologram recording medium;
Fig.3 is a diagrammatic view showing an arrangement of a system according to a preferred embodiment of the invention, for creating a holographic stereogram;
Fig.4 is a diagrammatic view showing an optical system located in a holographic stereogram printer apparatus of Fig. 3: in which Fig. 4A is a plan view and Fig. 4B is a side view;
Fig. 5 is a section view showing an example of a hologram recording medium;
Fig.6 is a diagrammatic view illustrating different steps of a photosensitive process of a photo-polymerisation type photopolymer; and
Fig.7 is a diagrammatic view showing an arrangement of a mechanism for feeding a recording medium.

### DESCRIPTION OF THE PREFERRED EMBODIMENTS

Hereafter, the description will be directed to concrete embodiments of the present invention with reference to the appended drawings. It goes without saying that the present invention is not limited to the following embodiments and thus may be changed in form without having to depart from the invention.

At first, the description will be directed to an arrangement of a system for creating a holographic stereogram according to an embodiment of the present invention. This embodiment is concerned with a holographic stereogram provided with horizontal parallax information by recording a plurality of stripped holographic elements on one recording medium. In practice, however, it is apparent that the present invention may be applied to holographic stereograms provided with horizontal and vertical parallax information by recording a plurality of dotted holographic elements on one recording medium.

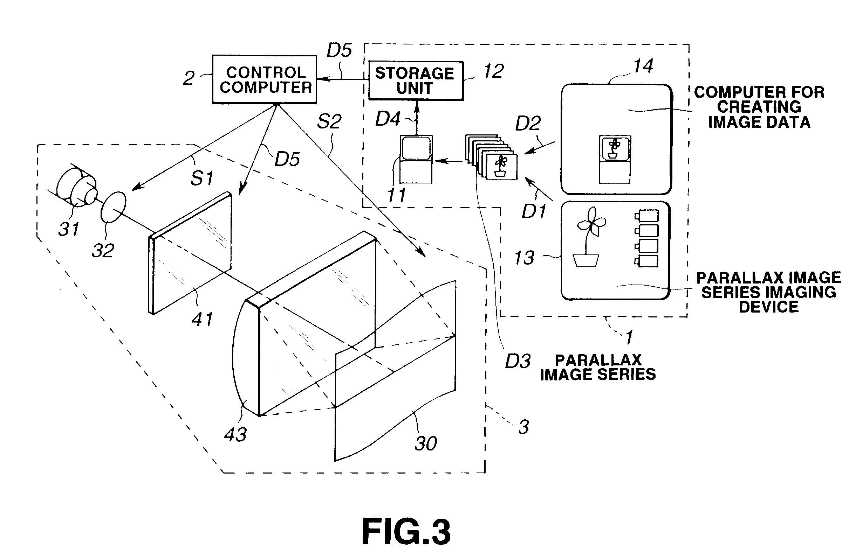

The present system is a system for creating a so-called one-step holographic stereogram which directly corresponds to the hologram recording medium where an interference pattern of the object beam and the reference beam is recorded. As shown in Fig.3, the system is arranged to have a data processing unit 1 for processing image data to be recorded, a control computer 2 for controlling an overall system, and a holographic stereogram printer apparatus 3 having an optical system for creating a holographic stereogram.

The data processing unit 1 operates to create parallax image series D3, based on a plurality of pieces of image data D1 containing parallax information, supplied from a parallax image series imaging device 13 provided with a multiple-lens camera, a movable camera or the like, or a plurality of pieces of image data D2 containing parallax information created by a computer 14 for generating image data.

The plurality of pieces of image data D1 containing the parallax information supplied from the parallax image series imaging device 13 indicate image data composed of plural images obtained by imaging a real object from different points of observation in the horizontal direction by means of concurrent imaging with a multiple-lens camera or sequential imaging with a moving camera.

The plurality of pieces of image data D2 containing the parallax information, created by the computer 14, indicate CAD (Computer-aided design) images or CG (Computer graphics) images created by providing sequential parallax in the horizontal direction.

Then, the data processing unit 1 performs a given image treatment for the holographic stereogram of the parallax image series D3 through the effect of an image processing computer 11. Then, the treated image data D4 is recorded in a recording unit 12 such as a memory or a hard disk.

When recording the image on the hologram recording medium, the data processing unit 1 operates to sequentially read the data one image by one image from the image data D4 recorded in the recording unit 12 and send out the image data D5 to the control computer 2.

On the other hand, the control computer 2 operates to drive the holographic stereogram printer apparatus 3 so that the images of the image data D5 supplied from the data processing unit 1 are sequentially recorded in a hologram recording medium 30 located in the printer apparatus 3, as stripped holographic elements. At this time, as will be described below, the control computer 2 controls a shutter 32, a display unit 41, a recording medium feeding mechanism and the other components located in the printer apparatus 3. Specifically, the control computer 2 operates to send out a control signal S1 to the shutter 32 for controlling the opening or closing of the shutter 32 and supplies the image data D5 to the display unit 41 so that the image of the image data D5 is displayed on the display unit 41. Further, the computer 3 also sends out a control signal S2 to the recording medium feeding mechanism for controlling the feeding operation of the mechanism.

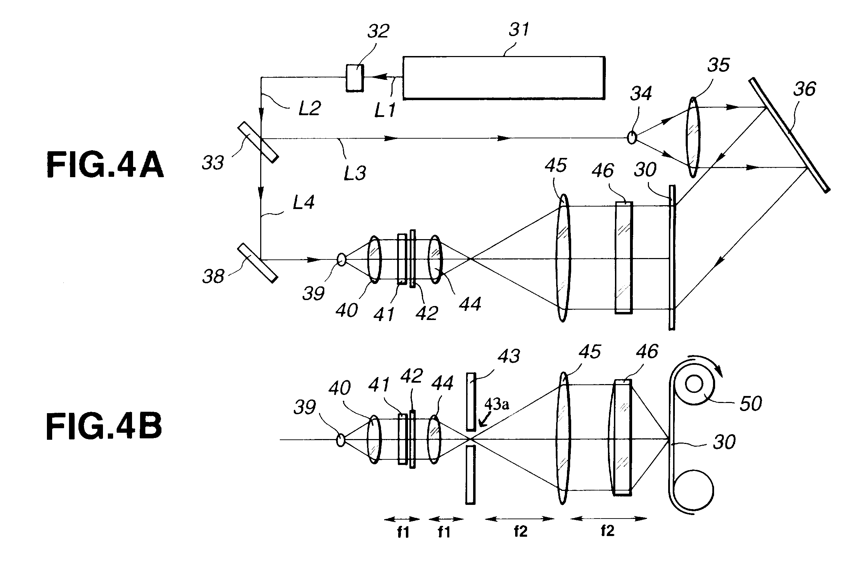

The holographic stereogram printer apparatus 3 will be discussed in detail with reference to Fig.4. Fig.4A shows an optical system of the overall printer apparatus 3 viewed from the top, while Fig.4B shows a portion for the object beam of an optical system of the printer apparatus 3 viewed from the lateral direction.

As shown in Fig.4A, the printer apparatus 3 includes a laser beam source 31 for firing a laser beam having a given wavelength, the shutter 32, and a half mirror 33, the latter two of which are located on an optical axis of a laser beam L1 emitted by the laser beam source 31. In this example, the laser beam source 31 employs an argon laser having a wavelength of 514,5 nm and an output of 200 mW.

The shutter 32 is controlled by the control computer 2. The shutter 32 is closed when the hologram recording medium 30 is not to be exposed or opened when the medium 30 is to be exposed. The half mirror 33 serves to separate the laser beam L2 transmitted through the shutter 32 into the reference beam and the object beam. The beam L3 reflected on the half mirror 33 is the reference beam. The beam L4 transmitted through the half mirror 33 is the object beam.

In the optical system, the optical path of the reference beam reflected on the half mirror 33 and entered into the hologram recording medium 30 has substantially the same length as the optical path of the object beam transmitted through the half mirror 33 and entered into the hologram recording medium 30. The similarity of the optical paths makes it possible to enhance the interference between the reference beam and the object beam, thereby creating a holographic stereogram offering a more vivid reproduced image.

On the optical axis of the beam L3 reflected on the half mirror 33, there are arranged a cylindrical lens 34, a collimator lens 35 for making the reference beam parallel, and a totally reflective mirror 36, in the described order. Those components are for the optical system for the reference beam.

The beam reflected on the half mirror 33 is converted into diffuse light emitted from a point light source through the effect of the cylindrical lens 34. Then, the diffuse light is converted into the parallel light through the collimator lens 35. Next, the parallel light is reflected on the totally reflective mirror 36 and then is entered into the hologram recording medium 30.

On the other hand, on the optical axis of the beam L4 transmitted through the half mirror 33, as shown in Figs.4A and 4B, there are arranged as an optical system for the object beam a totally reflective mirror 38 for reflecting the transmitted beam from the half mirror 33, a spatial filter 39 composed of a convex lens and a pin hole combined therewith, a collimator lens 40 for making the object beam parallel, a display unit 41 for displaying an image of an object to be recorded, a diffuser panel 42 for diffusing the light transmitted through the display unit 41, and a mask 43 having a stripped opening 43a, in the described order. Between the diffuser panel 42 and the mask 43, a first optical system is located for condensing the object beam transmitted through the diffuser panel onto the opening 43a of the mask 43. Between the mask 43 and the hologram recording medium 30, a second optical system is located for condensing the object beam transmitted through the mask 43 onto the hologram recording medium 30. In this embodiment, the first optical system is composed of a condensing lens 44 (whose focal distance is 200 mm in this example). The second optical system is composed of a lens 45 (whose focal distance is 600 mm in this example) for making the light transmitted through the mask 43 parallel and a cylindrical lens 46 (whose focal distance is 54 mm in this example) for condensing the parallel light onto the hologram recording medium 30.

Though not shown in the drawings, for a reflective hologram, in general, a one-dimensional diffuser panel is located immediately before the hologram recording medium 30. (For passive holograms, the panel is not necessary.)

The beam L4 transmitted through the half mirror 33 is reflected on the totally reflective mirror 38 and then is converted into diffuse light emitted from a point light source through the effect of the spatial filter 39. Next, the diffuse light is converted into parallel light through the collimator lens 40. Next, the parallel light is entered into the display unit 41. In this example, the spatial filter 40 is composed of an objective lens with a magnification of 20 times and a pin hole with a diameter of 20 µm. The collimator lens 40 has a focal distance of 100 mm.

The display unit 41 is a passive image display device composed of a LCD, for example and is controlled by the control computer 2. The display unit 41 is controlled to display the image formed by the image data D5 sent from the control computer 2. In this example, the used LCD is a monochrome LCD whose pixels form a 480 x 1068 array and whose size is 16.8 mm x 29.9 mm.

The light transmitted through the display unit 41 is converted into the transmitted light corresponding to the image displayed on the display unit 41. The transmitted light is diffused through the diffuser panel 42. The diffuser panel 42 is just required to be located close to the display unit 41. It may be immediately before or after the display unit 41. In this embodiment, the diffuser panel 42 is located immediately after the display unit 41.

The diffuser panel 42 serves to slightly diffuse the transmitted light from the display unit 41 for diffusing the light inside of the holographic element. This makes a great contribution to improving the image quality of the created holographic stereogram.

At this time, the diffuser panel 42 may be fixed. In place, the panel 42 may be moved randomly each time the holographic element is formed so that the panel 42 may be relocated at each holographic element. This relocation enables to reduce the noise localised to infinity when a person observes the hologram.

As described above, the location of the diffuser panel 42 allows the width inside of the holographic element to be uniformly exposed. This improves the quality of the resulting hologram. However, for implementing uniform exposure, the diffusing effect of the diffuser panel 42 is required to be intensified to some extent. The object beam diffused by the diffuser panel 42 is spread on the hologram recording medium 30. This results in exposing a wider range than the original width of the holographic element.

Then, the mask 43 is used for screening the unnecessary light so that each holographic element may be properly exposed. That is, the diffusion done by the diffuser panel 42 and the screening of the unnecessary light through the mask 43 make it possible to obtain the state shown in Fig.2C.

However, if the mask 43 is located immediately before the hologram recording medium 30, the area around the hologram recording medium 30 is made complicated.

In order to avoid the complication, in this embodiment, the first and the second optical systems are located so that the mask 43 is spaced from the hologram recording medium 30.

Specifically, the transmitted light from the display unit 41 is transmitted through the diffuser panel 42, where the light is diffused. Then, the diffused light is condensed through the condensing lens 44 located in the first optical system. The diffuser panel 42 serves to keep the object beam spread overa certain area without being condensed to one point.

Only the given area on the center of the spread condensed light is transmitted through the opening 43a of the mask 43. Only the light transmitted through the opening 43a is made parallel through the lens 45 located in the second optical system. The parallel light is condensed again through the cylindrical lens 46. The resulting object beam is entered into the hologram recording medium 30.

The object beam is shaped like a strip. The condensing range is a f3/f2-fold projection of the opening 43a of the mask 43 when the lens 45 has a focal distance of f2 and the cylindrical lens 46 has a focal distance of f3,

In this example, by setting the width of the opening 43a of the mask 43 to 2.2 mm, it was possible to condense the object beam on the stripped area whose width was about 0.2 mm of the hologram recording medium 30 and expose the holographic stereogram composed of the holographic elements each of which has a width of 0.2 mm. The result was excellent.

Further, the holographic stereogram printer apparatus 3 provides a recording medium feeding mechanism 50 for intermittently feeding the hologram recording medium 30 by one holographic element under the control of the control computer 2. As will be described below, the recording medium feeding mechanism 50 is arranged to intermittently feed the film-shaped hologram recording medium in response to a control signal from the control computer 2. When the printer apparatus 3 creates the holographic stereogram, on the hologram recording medium 30 set to the recording medium feeding mechanism 50 in a given state, the printer apparatus 3 operates to sequentially record the image formed by each image data piece of the parallax image sequences as a stripped holographic element.

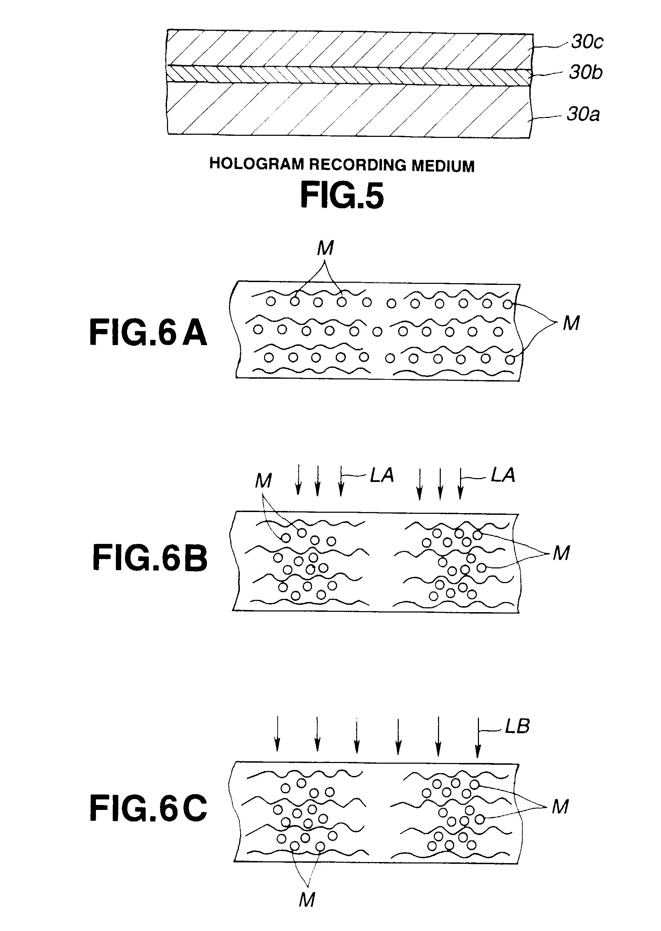

The hologram recording medium 30 used for the holographic stereogram creating system will be discussed in detail with reference to Figs. 5 and 6.

As shown in Fig.5, this hologram recording medium 30 is a so-called film-coating recording medium, which is formed of a tape-shaped film base material 30a, a photopolymer layer 30b formed on the film base material 30a, and a cover sheet 30c coated on the photopolymer layer 30b. In this example, the photopolymer 30b served as a photo-sensing portion employs a product "OMNI-DEX" manufactured by Dupon, Ltd. and has a thickness of about 20 mm.

In the initial state, as shown in Fig.6A, the photopolymer is composed of matrix polymer and monomer M uniformly dispersed therein. As shown in Fig.6B, a beam LA with a power of 10 to 400 mJ/cm² is applied to the photopolymer, so that the monomer M is polymerised in the exposed portion. As the exposed portion is made more and more polymerised, the monomer M is moved from the area around the exposed portion so that the density of the monomer M is variable in any location. This brings about the modulation of the refractive index. Then, as shown in Fig.6C, when an ultraviolet ray or visible light LB with a power of 1000 mJ/cm² is applied onto the overall surface of the exposed portion, the polymerisation of the monomer M is completed. The photopolymer changes the refractive index according to the incident light. Hence, the interference pattern caused by the interference between the reference beam and the object beam is allowed to be recorded as change of the refractive index.

The hologram recording medium 30 composed of such photopolymer does not need a special developing treatment after the exposure. Hence, the holographic stereogram printer apparatus 3 according to this embodiment in which is used the hologram recording medium 30 having the photopolymer as a photo-sensing portion may be simplified in construction.

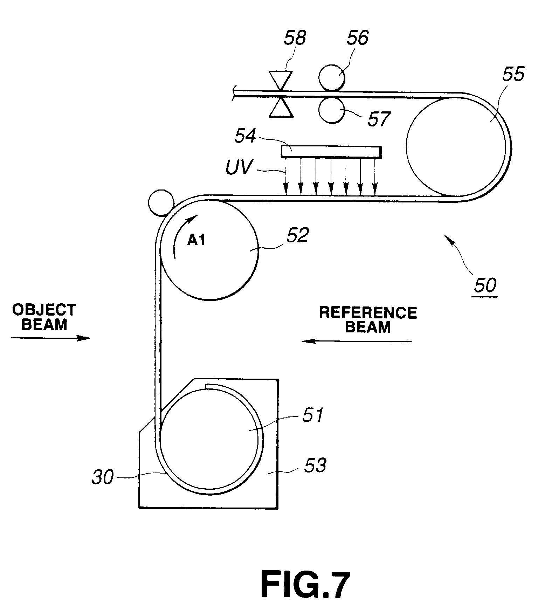

Next, the recording medium feeding mechanism 50 will be discussed in detail with reference to Fig.7. Fig.7 is an expanded view showing the recording medium feeding mechanism 50 provided in the holographic stereogram printer apparatus 3.

As shown in Fig.7, the recording medium feeding mechanism 50 includes a roller 51 and an intermittent feeding roller 52. The hologram recording medium 30 is stored in a film cartridge with the medium 30 wound around the roller 51. The recording medium feeding mechanism 50 is constructed to rotatively and axially support the roller 51 located in the film cartridge 53 mounted to a given position with a given amount of torque and hold the hologram recording medium 30 pulled out of the film cartridge 53 through the effect of the roller 51 and the intermittent feeding roller 52. The recording medium feeding mechanism 50 holds the hologram recording medium 30 so that the main face of the hologram recording medium 30 is substantially perpendicular to the object beam between the roller 51 and the intermittent feeding roller 52. The roller 51 and the intermittent feeding roller 52 are pulled against each other by a torsion coil spring. This pulling force applies given tension onto the hologram recording medium 30 loaded as bridged between the roller 51 and the intermittent feeding roller 52.

The intermittent feeding roller of the mechanism 50 is connected to a stepping motor (not shown). The roller 52 is allowed to be rotated in the direction indicated by the arrow Al of Fig.7 based on the force of rotation transmitted from the stepping motor. This stepping motor serves to sequentially rotate the roller 52 by a given angle corresponding to one holographic element each time the exposure of one image is terminated. This rotation results in feeding the hologram recording medium 30 by one holographic element at each exposure of one image.

An ultraviolet lamp 54 is located along the travelling path of the hologram recording medium 30 at a later stage of the intermittent feeding roller 52. This ultraviolet lamp 54 is used for completing the polymerisation of the monomer M of the exposed hologram recording medium 30 and serves to apply an ultraviolet ray UV of a given power to the hologram recording medium 30 fed by the roller 52.

At a stage along the travelling path of the hologram recording medium 30 beyond the ultraviolet lamp 54, a rotatively and axially supported heat roller 55, a pair of ejecting rollers 56 and 57, and a cutter 58 are located, in the described order.

The ejecting rollers 56 and 57 serve to feed the hologram recording medium 30 so that the side of the cover sheet 30c of the hologram recording medium 30 is wound halfway around the heat roller 55 in a contacting state. The ejecting rollers 56 and 57 are connected to a stepping motor (not shown) and are rotated using the force of rotation transmitted from the stepping motor. The stepping motor serves to rotate the ejecting rollers 56 and 57 by a given angle corresponding to one holographic element each time the exposure of one image is terminated in synchronism with the rotation of the intermittent feeding roller 52 in response to the control signal S2 supplied from the control computer 2. This rotation allows the hologram recording medium 30 to positively feed around the heat roller 55 in a contact state without the occurrence of slack in the hologram recording medium 30 between the intermittent feeding roller 52 and the ejecting rollers 56 and 57.

The heat roller 55 provides a heating unit such as a heater inside of itself. This heating unit serves to keep the peripheral side at a temperature of about 120° C. Then, the heat roller 55 serves to heat the photopolymer layer 30b of the hologram recording medium 30 being fed with the cover sheet 30c laid therebetween, for increasing a modulation of an refractive degree of the photopolymer layer 30b and fixing the recording image on the hologram recording medium 30. Hence, the heat roller 55 has an outer diameter selected so that the interval between the contact of the hologram recording medium 30 on the peripheral surface of the heat roller 55 and the release thereof is substantially similar to the interval when the recording image is fixed.

Further, the cutter 58 provides a cutter driving mechanism (not shown). By driving the cutter driving mechanism, the hologram recording medium 30 being fed to the cutter 58 can be cut out. This cutter driving mechanism operates to drive the cutter 58 when all of the image-recorded portion of the hologram recording medium 30 is ejected outside of the cutter 58 after all of each image formed by each image data piece of the parallax image series is recorded on the hologram recording medium 30 in response to the control signal S2 supplied from the control computer 2. This operation allows the portion where the image data is recorded to be cut out of the other portion and to be ejected outside as one holographic stereogram.

Finally, a description will be given as to how the holographic stereogram creating system having the foregoing construction operates to create the holographic stereogram.

When creating the holographic stereogram, the control computer 2 operates to drive the display unit 41 based on the image data D5 supplied from the data processing unit 1 and display the image on the display unit 41. Then, the control computer 2 operates to send out the control signal S1 to the shutter 32 so that the shutter 32 is open for a given time for exposing the hologram recording medium 30. The laser beam L2 transmitted through the shutter 32, fired by the laser beam source 31, is partially reflected on the half mirror 33 and partially transmitted through the half mirror 33. The reflected beam L3 is entered as the reference beam into the hologram recording medium 30 through a light introducing block 37. The transmitted beam L4 is projected on the display unit 41 as projection light. This projection light is entered as the object beam into the hologram recording medium 30. This operation allows one image displayed on the display unit 41 to be recorded as a stripped holographic element on the hologram recording medium 30.

Then, on the termination of recording one image onto the holographic recording medium 30, the control computer 2 operates to send out the control signal S2 to the stepping motor connected to the intermittent feeding roller 52 and the stepping motor connected to the ejecting rollers 56 and 57 for driving them. This operation allows the hologram recording medium 30 to be fed by one holographic element.

Next, the control computer 2 operates to drive the display unit 41 based on the next image data D5 supplied from the data processing unit 1 and display the next image on the display unit 41. Then, by sequentially repeating the similar operation, each image formed on each image data D5 supplied from the data processing unit 1 is sequentially recorded as stripped holographic elements on the hologram recording medium 30.

That is, this holographic stereogram creating system is arranged so that the image formed on the image data recorded in the recording unit 12 is sequentially displayed on the display unit 41, the shutter 32 is open for each image, and each image is sequentially recorded as a stripped holographic element on the hologram recording medium 30. At this time, the hologram recording medium 30 is fed by one holographic element for each image. Hence, the holographic elements are sequentially arranged in the horizontal (lateral) direction. This arrangement allows a plurality of images containing the horizontal parallax information to be recorded as laterally sequential holographic elements on the hologram recording medium 30. This results in providing the holographic stereogram with the horizontal parallax.

Then, the ultraviolet ray UV is applied from the ultraviolet lamp 54 onto the hologram recording medium 30 on which the holographic elements are recorded. This application completes the polymerisation of the monomer M. Next, the hologram recording medium 30 is heated by the heat roller 55 for fixing the recording image.

Then, when all of the portion where the image is recorded is ejected outside, the control computer 2 operates to supply the control signal S2 to the cutter driving mechanism for driving the mechanism. This results in cutting the portion where the image is recorded of the hologram recording medium 30 by the cutter 58 and then ejecting it as one holographic stereogram.

The foregoing process completes the holographic stereogram provided with the horizontal parallax.

The foregoing description has concerned with the embodiments of the present invention. However, the present invention is not limited to the foregoing embodiments and may be transformed in various forms.

For example, the foregoing description has concerned with the holographic stereogram provided with only the horizontal parallax (that is, the stripped holographic element). Similarly, the present invention may apply to the holographic stereogram having horizontal and vertical parallaxes and stripped holographic elements.

Further, the foregoing description has concerned with the reflective hologram. The present invention may apply to a passive hologram or an edge-lit hologram.

Many widely different embodiments of the present invention may be constructed without departing from the spirit and scope of the present invention. It should be understood that the present invention is not limited to the specific embodiments described in the specification, except as defined in the appended claims.

## Claims

1. A method for creating a holographic stereogram comprising the steps of:
displaying an image corresponding to a co-ordinate location of a hologram recording medium on display means (41);
condensing an object beam onto said co-ordinate location of said hologram recording medium (30), wherein said object beam is a laser beam transmitted through said display means, and applying a reference beam onto said hologram recording medium, wherein said reference beam is part of said laser beam divided before transmission through said display means; and
sequentially forming stripped or dotted holographic elements on said hologram recording medium; and
wherein a diffuser panel (42) for diffusing light is located close to said display means; and
wherein a mask (43) having an opening for said holographic element is located between said display means and said diffuser panel and said hologram recording medium, and
said object beam is condensed and transmitted through said mask and then is condensed again through an optical system (45, 46) and applied onto said hologram recording medium.

2. A method for creating a holographic stereogram as claimed in claim 1, wherein said diffuser panel (42) is movable and the position of said diffuser panel is changed at each time of forming said holographic elements.

3. An apparatus for creating a holographic stereogram comprising:
display means (41) for displaying an image corresponding to a co-ordinate location of a hologram recording medium (30);
a laser beam source (31) for applying a laser beam to be transmitted through said display means onto said hologram recording medium as an object beam and part of said laser beam divided before transmission through said display means onto said hologram recording medium as a reference beam;
a diffuser panel (42) located close to said display means and for diffusing said beam;
a mask (43) having an opening (43a) corresponding to each holographic element, said mask located between said display means with said diffuser panel and said hologram recording medium;
a first optical system (44) located between said display means with said diffuser panel and said mask and for condensing said object beam transmitted through said display means and said diffuser panel; and
a second optical system (45, 46) located between said mask and said hologram recording medium and for re-condensing said object beam transmitted through the opening of said mask onto the co-ordinate location of said hologram recording medium.
